# EUROPÄISCHE PATENTSCHRIFT

(11) **EP 3 899 884 B1**
(45) Veröffentlichungstag und Bekanntmachung des Hinweises auf die Patenterteilung: **27.11.2024**
(21) Anmeldenummer: 19832830.4
(22) Anmeldetag: 17.12.2019
(51) Int. Cl.: G07D 11/235, G07D 11/30, G07D 11/32

(54) **VERFAHREN UND VORRICHTUNG ZUR WEITERBEARBEITUNG VON WERTDOKUMENTEN**
METHOD AND DEVICE FOR FURTHER PROCESSING VALUE DOCUMENTS
PROCÉDÉ ET DISPOSITIF POUR TRAITER DES DOCUMENTS DE VALEUR

(30) Priorität: 19.12.2018 DE 102018010036
(43) Veröffentlichungstag der Anmeldung: 27.10.2021
(73) Patentinhaber: Giesecke+Devrient Currency Technology GmbH, 81677 München (DE)
(72) Erfinder: BRAUN, Harald, 81541 München (DE); DITTRICH, Steffen, 85774 Unterföhring (DE); GRYXA, Reinhold, 80933 München (DE)
(74) Vertreter: Giesecke+Devrient IP
(86) Internationale Anmeldenummer: PCT/EP2019/000341
(87) Internationale Veröffentlichungsnummer: WO 2020/126067

(56) Entgegenhaltungen:
- WO-A1-2017/175769
- JP-A- 2014 223 924
- JP-A- 2015 056 010

## Beschreibung

Die Erfindung betrifft ein Verfahren und eine Vorrichtung zur Weiterbearbeitung und ggf. zur Verpackung von Wertdokumenten, insbesondere von Banknoten.

Dokument JP 2015 056010 A offenbart eine Banknotenbündelungseinheit, die die Funktion hat, Banknoten zu bündeln, die in der Banknotenbündelungsvorrichtung angesammelt wurden, um sie mit Hilfe des Bindebandes zu binden, auf das ein Barcode usw. durch die Bindebanddruckeinheit gedruckt wird. Das Bündelungsband kann eine Seriennummer enthalten, die auf die oberste Banknote der gebündelten Banknote gedruckt wird.

Bei der automatisierten Bearbeitung von Wertdokumenten, wie zum Beispiel Banknoten, werden diese durch eine Wertdokumentbearbeitungsvorrichtung einzeln hinsichtlich verschiedener Eigenschaften geprüft, ggf. sortiert, und in Ausgabefächer gestapelt oder ggf. direkt einer Vernichtung zugeführt. Bei manchen Wertdokumentbearbeitungsvorrichtungen werden die in die Ausgabefächer ausgegebenen Wertdokumentstapel zunächst mittels Banderolen zu banderolierten Päckchen zusammengefasst und mehrere banderolierte Päckchen anschließend mit Hilfe eines Vorverpackungsmaterials zu einem Bündel gebündelt. Die vorverpackten Bündel werden dann mit Hilfe einer Transportvorrichtung zu einer Verpackungsvorrichtung transportiert, in welcher ein oder mehrere der Bündel zu einer Verpackungseinheit verpackt werden. Um die vorverpackten Bündel voneinander unterscheiden zu können, werden diese, auf ihrem Transportweg von der Wertdokumentbearbeitungsvorrichtung zur Verpackungsvorrichtung, mit einem Etikett versehen, das das jeweilige Bündel identifizierbar macht.

Auf dem Transportweg von der Wertdokumentbearbeitungsvorrichtung zur Verpackungsvorrichtung kann es jedoch zu technischen Problemen oder Störungen kommen, die das Eingreifen eines Bedieners erfordert. Um diese zu beheben, muss der Bediener in manchen Fällen eines oder mehrere der Bündel von der Transportvorrichtung entnehmen und - nach Behebung der Störung - wieder in der richtigen Reihenfolge auflegen. Dabei kann es zu einer versehentlichen Vertauschung der Bündel kommen, bei der die Reihenfolge der Bündel auf der Transporteinrichtung verändert wird. Die veränderte Reihenfolge kann dazu führen, dass, beim anschließenden Etikettieren der Bündel, die Etiketten auf die falschen Bündel aufgebracht werden und so falsch etikettierte Bündel in einer Verpackungseinheit landen. Die fehlerhaften Verpackungseinheiten müssen anschließend wieder ausgepackt werden und die Fehler behoben werden.

Es ist daher eine Aufgabe der Erfindung, das nachträgliche Auspacken fehlerhafter Verpackungseinheiten zu vermeiden.

Diese Aufgabe wird durch das Verfahren und die Vorrichtung zur Weiterbearbeitung von Wertdokumenten, gemäß den unabhängigen Ansprüchen gelöst.

Mit einer Wertdokumentbearbeitungsvorrichtung werden Wertdokumente bearbeitet, insbesondere geprüft und ggf. sortiert, und zu Wertdokumentstapeln gestapelt. Die Wertdokumentstapel werden - z.B. im Ausgabemodul der Wertdokumentbearbeitungsvorrichtung - jeweils z.B. mit einem Umschließungsmaterial zu einem Bündel zusammengebündelt und das Bündel in ein Ausgabefach der Wertdokumentbearbeitungsvorrichtung ausgegeben. Für die Weiterbearbeitung der Wertdokumente nach der Wertdokumentbearbeitungsvorrichtung bestimmt die die Wertdokumentbearbeitungsvorrichtung jeweils die sichtbare Seriennummer des jeweiligen Wertdokumentstapels bzw. Bündels, die für den Wertdokumentstapel und das Bündel repräsentativ ist. Die sichtbare Seriennummer des jeweilige Bündels ist von außerhalb des Bündels sichtbar, z.B. ist die sichtbare Seriennummer des Bündels die Seriennummer des stapelobersten oder des stapeluntersten Wertdokuments des jeweiligen Bündels. Prinzipiell kann es eine oder zwei sichtbare Seriennummern eines Bündels geben. Im Fall zweier sichtbarer Seriennummern reicht es, dass die Wertdokumentbearbeitungsvorrichtung eine dieser beiden bestimmt.

Zur Weiterbearbeitung der Wertdokumente bzw. der Bündel wird die sichtbaren Seriennummer des jeweiligen Bündels von der Wertdokumentbearbeitungsvorrichtung an eine Steuereinrichtung übermittelt. Anhand der jeweiligen sichtbaren Seriennummer bestimmt die Steuereinrichtung für das jeweilige Bündel eine maschinenlesbare Identifikation, welche zum Aufbringen auf ein Etikett für das jeweilige Bündel vorgesehen ist. Die Steuereinrichtung erzeugt zudem eine Verknüpfungsinformation, die angibt, zu welcher sichtbaren Seriennummer des jeweiligen Bündels die jeweilige maschinenlesbare Identifikation gehört bzw. mit welcher sichtbaren Seriennummer des jeweiligen Bündels die jeweilige maschinenlesbare Identifikation verknüpft ist.

Die maschinenlesbare Identifikation wird von der Steuereinrichtung an eine mit der Steuereinrichtung verbundene Etikettiereinrichtung übermittelt. Die Etikettiereinrichtung erstellt Etiketten für die einzelnen Bündel, z.B. mit Hilfe eines Etikettendruckers der Etikettiereinrichtung. Für jedes Bündel wird auf das jeweilige Etikett eine der von der Steuereinrichtung übermittelten maschinenlesbaren Identifikationen aufgebracht. Die aus der Wertdokumentbearbeitungsvorrichtung ausgegebenen Bündel werden z.B. mittels einer Transporteinrichtung automatisch von der Wertdokumentbearbeitungsvorrichtung zu der Etikettiereinrichtung transportiert. Die Etikettiereinrichtung etikettiert die Bündel, insbesondere durch Befestigen jeweils desjenigen Etiketts an dem Umschließungsmaterial des jeweiligen Bündels, das für das jeweilige Bündel erstellt wurde. Bei der aufgebrachten maschinenlesbaren Identifikation kann es sich z.B. um einen Barcode, einen Data-Matrix-Code (z.B. QR-Code) oder ein RFID-Element handeln.

Die Bündel werden durch eine Kontrolleinrichtung erfasst, die eines oder mehrere Bilder des jeweiligen Bündels aufnimmt und hierzu eine oder mehrere Kameras aufweist. Das Bild bzw. die Bilder werden so aufgenommen, dass darauf die sichtbare Seriennummer des jeweiligen Bündels abgebildet ist, und ggf. auch das Etikett des Bündels. Auf einem der Bilder ist derjenige Wertdokumentabschnitt des stapelobersten oder stapeluntersten Wertdokuments abgebildet, der die sichtbare Seriennummer des jeweiligen Bündels aufweist. Beim Überprüfen des jeweiligen Bündels wird erstens aus einem von der Kontrolleinrichtung aufgenommenen Bild die tatsächliche sichtbare Seriennummer des jeweiligen Bündels extrahiert. Beim Überprüfen des jeweiligen Bündels wird zweitens auch diejenige sichtbare Seriennummer ermittelt, die zu der maschinenlesbaren Identifikation desjenigen Etiketts gehört, das durch die Etkiettiereinrichtung für das jeweilige Bündel erstellt wurde, d.h. die zu der maschinenlesbaren Information des jeweiligen Etiketts gehörende sichtbare Seriennummer.

Das jeweilige Bündel wird mittels einer Transporteinrichtung entlang einer Transportrichtung entweder zuerst zu der Etikettiereinrichtung und dann zu der Kontrolleinrichtung oder alternativ zuerst zu der Kontrolleinrichtung dann zu der Etikettiereinrichtung transportiert.

In einem Ausführungsbeispiel wird das jeweilige Bündel mit dem für das jeweilige Bündel erstellten Etikett etikettiert, bevor das jeweilige Bündel durch die Kontrolleinrichtung erfasst wird, so dass die Kontrolleinrichtung das bereits etikettierte Bündel erfasst. Die Kontrolleinrichtung ist in diesem Fall entlang der Transportrichtung der Bündel nach der Etikettiereinrichtung angeordnet. Durch das Überprüfen der bereits etikettierten Bündel wird eine zuverlässigere Überprüfung der Bündel erreicht, da bei der Überprüfung auch Fehler aufgedeckt werden, die in der Etikettiereinrichtung auftreten, z.B. beim Etikettendrucken, - aufbringen oder eine Vertauschung der Bündelreihenfolge in der Etikettiereinrichtung.

Bei diesem Ausführungsbeispiel ist das Etikett des jeweiligen Bündels, das die zu der sichtbaren Seriennummer gehörende maschinenlesbaren Information aufweist, das bereits auf dem Umschließungsmaterial des jeweiligen Bündels aufgebrachte Etikett. Zum Zeitpunkt des Überprüfens des jeweiligen Bündels ist das jeweilige Bündel bereits etikettiert. Beim Überprüfen wird dann die sichtbare Seriennummer ermittelt, die zu der maschinenlesbaren Information des auf dem jeweiligen Bündels aufgebrachten Etiketts gehört. Zum Beispiel wird dazu aus der maschinenlesbaren Identifikation des Etiketts anhand der Verknüpfungsinformation die mit der maschinenlesbaren Information verknüpfte sichtbare Seriennummer ermittelt. Zur Ermittlung der zu der maschinenlesbaren Information gehörenden sichtbare Seriennummer kann aber auch eine Decodierung der maschinenlesbaren Identifikation durchgeführt werden, falls die sichtbare Seriennummer in der maschinenlesbaren Identifikation in codierter Form enthalten ist. Die tatsächliche sichtbare Seriennummer des jeweiligen etikettierten Bündels wird dann mit der sichtbaren Seriennummer verglichen, die zu der maschinenlesbaren Information des auf das Bündel aufgebrachten Etiketts gehört.

In einem alternativen Ausführungsbeispiel wird das jeweilige Bündel durch die Kontrolleinrichtung erfasst, bevor das jeweilige Bündel mit dem für das jeweilige Bündel erstellten Etikett etikettiert wird, so dass die Kontrolleinrichtung das noch nicht etikettierte Bündel erfasst. In diesem Fall ist die Kontrolleinrichtung entlang der Transportrichtung der Bündel vor der Etikettiereinrichtung angeordnet. Gegenüber der vorher genannten Ausführungsbeispiel hat dies den Vorteil, dass Fehler vor der Etikettierung entdeckt werden und dadurch vermieden wird, dass nachträglich Etiketten von falsch etikettierten Bündel entfernt werden müssen. Um eine versehentliche Änderung der Reihenfolge der Bündel durch den Bediener in dem Transportabschnitt zwischen der Kontrolleinrichtung und der Etikettiereinrichtung zu verhindern, ist bei diesem Ausführungsbeispiel die Kontrolleinrichtung entlang der Transportrichtung bevorzugt unmittelbar vor der Etikettiereinrichtung angeordnet, so dass für einen Bediener kein Zugriff auf die Bündel diesen Transportabschnitt möglich ist. Die Kontrolleinrichtung kann dazu an oder in einem die Etikettiereinrichtung umgebenden Gehäuse angeordnet sein.

Im Fall des alternativen Ausführungsbeispiels erfasst die Kontrolleinrichtung das noch nicht etikettierte Bündel. Das Etikett des jeweiligen Bündels, das die zu der maschinenlesbaren Information gehörende sichtbare Seriennummer angibt, ist dann das für das jeweilige Bündel vorgesehene Etikett, das noch nicht auf dem Umschließungsmaterial des jeweiligen Bündels aufgebracht ist. Zum Zeitpunkt des Überprüfens des jeweiligen Bündels ist das Etikett nur von der Etikettiereinrichtung für das jeweilige Bündel erstellt worden und zum Aufbringen auf dieses Bündel bereit gestellt, aber noch nicht auf das jeweilige Bündel aufgebracht. Beim Überprüfen wird die sichtbare Seriennummer ermittelt, die zu der maschinenlesbaren Information desjenigen Etiketts gehört, das für das jeweilige Bündel vorgesehen ist und zum Aufbringen auf das jeweilige Bündel bereit steht. Zum Beispiel sucht die Steuereinrichtung heraus, welche maschinenlesbare Identifikation das nächste, zum Aufbringen auf ein Bündel von der Etikettiereinrichtung bereit gestellte Etikett aufweist, und ermittelt anhand der Verknüpfungsinformation die mit der maschinenlesbaren Information verknüpfte sichtbare Seriennummer. Hierzu kann es hilfreich sein, dass die Etikettiereinrichtung an die Steuereinrichtung jedes Mal eine Rückmeldung gibt, wenn wieder ein Bündel mit einem bereit gestellten Etikett etikettiert wurde. Die tatsächliche sichtbare Seriennummer des jeweiligen (noch nicht etikettierten) Bündels wird dann mit der sichtbaren Seriennummer verglichen, die zu der maschinenlesbaren Information des (noch nicht aufgebrachten) Etiketts gehört, das zum Aufbringen auf das jeweilige Bündel vorgesehen ist. Zum Beispiel wartet die Etikettiereinrichtung mit dem Aufbringen des fertig gedruckten Etiketts, bis beim Überprüfen des zugehörigen Bündels - sofern beim Überprüfen kein Fehler festgestellt wird - das jeweilige Bündel zum Aufbringen des jeweiligen Etiketts freigegeben wird und etikettiert das Bündel dann schließlich.

In Abhängigkeit davon, ob das Überprüfen des jeweiligen Bündels ergibt, dass die tatsächliche sichtbare Seriennummer des jeweiligen Bündels mit der zu der maschinenlesbaren Identifikation des jeweiligen Etiketts gehörenden sichtbaren Seriennummer übereinstimmt oder nicht, wird die Weiterbearbeitung des jeweilige Bündels fortgesetzt oder angehalten. Bei der Fortsetzung der Weiterbearbeitung kann das jeweilige Bündel insbesondere durch die Etikettiereinrichtung mit dem für das Bündel vorgesehenen Etikett etikettiert werden und/oder durch eine Verpackungsvorrichtung verpackt werden. Bei dem alternativen Ausführungsbeispiel, bei dem das Überprüfen des jeweiligen Bündels vor dem Etikettieren des jeweiligen Bündels erfolgt, wird das jeweilige Bündel - falls das Überprüfen keinen Fehler aufgezeigt hat - bei der Weiterbearbeitung bevorzugt zuerst durch die Etikettiereinrichtung mit dem für das Bündel vorgesehenen Etikett etikettiert und anschließend durch eine Verpackungsvorrichtung verpackt.

Das Überprüfen der jeweiligen Bündel kann durch die Kontrolleinrichtung oder die Steuereinrichtung oder durch beide im Zusammenspiel miteinander durchgeführt werden. Durch die erfindungsgemäße Überprüfen der sichtbaren Seriennummern wird eine fehlerhafte Etikettierung der Bündel bzw. das Verpacken fehlerhaft etikettierter Bündel vermieden. Denn wenn bei technischen Problemen oder Störungen, durch den Eingriff eines Bedieners die Reihenfolge der Bündel verändert wird, in der diese zur Etikettiereinrichtung gelangen, so fällt dies bei der Überprüfung der Seriennummern auf. Die Weiterbearbeitung der Bündel wird dann rechtzeitig angehalten und der Bediener kann benachrichtigt werden.

Falls das Überprüfen des jeweiligen Bündels ergibt, dass die tatsächliche sichtbare Seriennummer des jeweiligen Bündels mit der zu der maschinenlesbaren Identifikation des jeweiligen Etiketts gehörenden sichtbaren Seriennummer übereinstimmt, wird das jeweilige Bündel z.B. zu einer Verpackungsvorrichtung weitergeleitet und das etikettierte Bündel mit Hilfe der Verpackungsvorrichtung verpackt. Dies kann automatisch mit Hilfe einer Transporteinrichtung durchgeführt werden, die entlang der Transportrichtung der Bündel nach der Kontrolleinrichtung und der Etikettiereinrichtung angeordnet ist und zum Transportieren des jeweiligen etikettierten Bündels in die Verpackungsvorrichtung eingerichtet ist. Beim Verpacken mit Hilfe der Verpackungsvorrichtung können jeweils eines oder jeweils mehrere der etikettierten Bündel zu jeweils einer Verpackungseinheit verpackt werden.

Falls das Überprüfen des jeweiligen Bündels ergibt, dass die tatsächliche sichtbare Seriennummer des jeweiligen Bündels mit der zu der maschinenlesbaren Identifikation des jeweiligen Etiketts gehörenden sichtbaren Seriennummer nicht übereinstimmt, wird das Verpacken durch eine Verpackungsvorrichtung verhindert, z.B. dadurch, dass das jeweilige etikettierte Bündel nicht an die Verpackungsvorrichtung weitergeleitet wird. Bevorzugt wird bei Nichtübereinstimmung der sichtbaren Seriennummern eine Fehlermeldung an einer Bedienerschnittstelle ausgegeben, z.B. an einer Bedienerschnittstelle der Verpackungsvorrichtung. Alternativ kann bei Nichtübereinstimmung der sichtbaren Seriennummern das jeweilige etikettierte Bündel trotzdem an die Verpackungsvorrichtung weitergeleitet werden, aber die Steuereinrichtung ein Anhalten der in die Verpackungsvorrichtung führenden Transporteinrichtung auslösen oder ein Anhalten der Verpackungsvorrichtung auslösen. Die Steuereinrichtung kann die Verpackungsvorrichtung auch dazu veranlassen, die fehlerhaften Bündel wieder unverpackt aus der Verpackungsvorrichtung auszugeben. Dabei können die fehlerhaften Bündel aussortiert und von den verpackten Bündeln getrennt ausgegeben werden.

Bei dem Ausführungsbeispiel, bei dem die Kontrolleinrichtung das bereits etikettierte Bündel erfasst, kann auf dem aufgenommenen Bild des jeweiligen Bündels, auf dem die sichtbare Seriennummer abgebildet ist, ggf. zusätzlich auch das Etikett des Bündels abgebildet sein, das die maschinenlesbare Identifikation des jeweiligen etikettierten Bündels aufweist. Falls sich die sichtbare Seriennummer und das Etikett auf derselben Seite des Bündels befinden, werden sie bevorzugt auch im selben Kamerabild abgebildet. Das Etikett wird in der Etikettiereinrichtung in diesem Fall gezielt so aufgebracht, dass es die sichtbare Seriennummer nicht verdeckt. Dann können sichtbare Seriennummer und maschinenlesbare Identifikation und aus demselben Kamerabild extrahiert werden.

Stattdessen kann das Etikett aber auch auf einem anderen von der Kontrolleinrichtung aufgenommenen Bild abgebildet sein, das die Kontrolleinrichtung von dem jeweiligen Bündel aufgenommen hat,. Zum Beispiel kann das Etikett des Bündels auf derjenigen Seite des Bündels aufgebracht sein, an der sich das stapeloberste Wertdokument befindet, und die sichtbare Seriennummer befindet sich auf dem stapeluntersten Wertdokument. Dann werden die sichtbare Seriennummer und die maschinenlesbare Identifikation aus verschiedenen Kamerabildern extrahiert. Das andere Bild wird von einer anderen Seite des etikettierten Bündels, insbesondere von der (im Vergleich zum zuvor genannten Bild) gegenüberliegenden Seite des etikettierten Bündels aufgenommen. Das andere Bild kann von einer zweiten Kamera der Kontrolleinrichtung aufgenommen werden, die z.B. auf die gegenüberliegende Seite des etikettierten Bündels gerichtet ist - im Vergleich zur zuvor genannten (ersten) Kamera. Alternativ kann auch die erste Kamera nacheinander die beiden Bilder erfassen, durch Bewegen der Kamera oder durch Drehung des Bündels zwischen dem Aufnehmen der beiden Bilder.

Bei dem Ausführungsbeispiel, bei dem die Kontrolleinrichtung das bereits etikettierte Bündel erfasst, kann bei der Überprüfung des jeweiligen Bündels die maschinenlesbare Identifikation des Etiketts aus einem von der Kontrolleinrichtung aufgenommenen Bild extrahiert werden. Dabei kann der die maschinenlesbare Identifikation bildende Barcode oder Data-Matrix-Code aus dem Bild extrahiert werden und eine Decodierung des Barcodes oder Data-Matrix-Codes durchgeführt werden. Die Kontrolleinrichtung oder eine Überprüfungseinrichtung extrahiert die maschinenlesbare Identifikation des jeweiligen Etiketts aus dem aufgenommenen Bild oder aus einem anderen von der Kontrolleinrichtung aufgenommenen Bild, das die Kontrolleinrichtung von dem jeweiligen Bündel aufgenommen hat,. Alternativ kann die maschinenlesbare Identifikation des jeweiligen etikettierten Bündels auch anderweitig erfasst werden, z.B. mittels eines Lesers, den die Kontrolleinrichtung zusätzlich zu der Kamera aufweist, der zum Einlesen der maschinenlesbaren Information des jeweiligen etikettierten Bündels verwendet wird, z.B. einen Barcodeleser oder Data-Matrix-Code-Leser oder RFID-Leser.

Die Erfindung betrifft auch eine Vorrichtung zur Weiterbearbeitung der mit der Wertdokumentbearbeitungsvorrichtung bearbeiteten und zu Wertdokumentstapeln gestapelten Wertdokumente, die zu einem Bündel zusammengebündelt wurden. Die Vorrichtung weist die mit der Wertdokumentbearbeitungsvorrichtung verbundene Steuereinrichtung auf, die dazu eingerichtet ist, die jeweilige von der Wertdokumentbearbeitungsvorrichtung bestimmte sichtbare Seriennummer des jeweiligen Bündels von der Wertdokumentbearbeitungsvorrichtung zu verarbeiten, und eine maschinenlesbare Identifikation für das jeweilige Bündel zu bestimmen und eine Verknüpfungsinformation zu erzeugen, die angibt, mit welcher sichtbaren Seriennummer die jeweilige maschinenlesbare Identifikation verknüpft ist. Ferner weist die Vorrichtung die mit der Steuereinrichtung verbundene Etikettiereinrichtung auf, die dazu eingerichtet ist, eine von der Steuereinrichtung an die Etikettiereinrichtung übermittelte maschinenlesbare Identifikation zu verarbeiten, und die zum Erstellen eines Etiketts eingerichtet ist, das die von der Steuereinrichtung übermittelte maschinenlesbare Identifikation aufweist, und die zum Etikettieren des jeweiligen Bündels eingerichtet ist.

Optional weist die Weiterbearbeitungsvorrichtung auch eine Transporteinrichtung zum Transportieren des jeweiligen Bündels (von der Wertdokumentbearbeitungsvorrichtung) zu der Etikettiereinrichtung und dann zur Kontrolleinrichtung (oder umgekehrt) auf. Die Transportvorrichtung kann auch zusätzlich zur Weiterbearbeitungsvorrichtung vorhanden sein, z.B. ist sie eigenständig oder Teil der Wertdokumentbearbeitungsvorrichtung.

Die Vorrichtung weist zum Erfassen des jeweiligen Bündels eine Kontrolleinrichtung auf, die eine oder mehrere Kamera aufweist. Die Kamera oder eine der Kameras ist derart angeordnet, dass sie ein Bild des jeweiligen Bündels aufnehmen kann, auf dem die sichtbare Seriennummer des jeweiligen Bündels und ggf. zusätzlich auch dessen Etikett abgebildet sind. Die Steuereinrichtung und/ oder die Kontrolleinrichtung sind dazu eingerichtet, beim Überprüfen des jeweiligen Bündels
- aus dem von der Kontrolleinrichtung aufgenommenen Bild, die tatsächliche sichtbare Seriennummer des jeweiligen Bündels zu extrahieren, und
- die sichtbare Seriennummer zu ermitteln, die zu der maschinenlesbaren Identifikation desjenigen Etiketts gehört, das für das jeweilige Bündel erstellt wurde, und
- die tatsächliche sichtbare Seriennummer des jeweiligen Bündels mit zu der maschinenlesbaren Identifikation des jeweiligen Etiketts gehörenden sichtbaren Seriennummer zu vergleichen, und
- in Abhängigkeit davon, ob das Überprüfen des jeweiligen Bündels ergibt, dass die tatsächliche sichtbare Seriennummer des jeweiligen Bündels mit zu der maschinenlesbaren Identifikation des jeweiligen Etiketts gehörenden sichtbaren Seriennummer übereinstimmt oder nicht, die Weiterbearbeitung des jeweiligen Bündels fortzusetzen oder anzuhalten, insbesondere ein Verpacken des jeweiligen etikettierten Bündels durch eine Verpackungsvorrichtung zu veranlassen oder das Verpacken durch die Verpackungsvorrichtung zu verhindern.

Die Wertdokumentbearbeitungsvorrichtung erzeugt eine Vielzahl von Wertdokumentstapeln, die in einer bestimmten Reihenfolge nacheinander von der Wertdokumentbearbeitungsvorrichtung ausgegeben werden und jeweils (durch die Wertdokumentbearbeitungsvorrichtung oder eine daran angeschlossene Bündelvorrichtung) gebündelt werden. Die Wertdokumentbearbeitungsvorrichtung übergibt die Bündel derart an die Transporteinrichtung, dass die Bündel in der bestimmten Reihenfolge nacheinander auf der Transporteinrichtung angeordnet sind und in dieser Reihenfolge zu der Etikettiereinrichtung (zuerst zur Etikettiereinrichtung und dann zur Kontrolleinrichtung oder umgekehrt) transportiert werden. Die ausgegebenen Bündel werden also in der von der Wertdokumentbearbeitungsvorrichtung vorgegebenen Reihenfolge mittels der Transporteinrichtung zur Etikettiereinrichtung transportiert. Für die richtige Zuordnung der Bündel zu den Etiketten übermittelt die Wertdokumentbearbeitungsvorrichtung die sichtbaren Seriennummern der an die Transporteinrichtung übergebenen Bündel an die Steuereinrichtung bevorzugt mit derselben Reihenfolge, in der die zugehörigen Bündel vorgesehen sind, auf der Transporteinrichtung zu der Etikettiereinrichtung transportiert zu werden (und in der sie auch tatsächlich transportiert werden, sofern keine versehentliche manuelle Vertauschung der Bündel erfolgt).

Hierzu kann die Wertdokumentbearbeitungsvorrichtung die sichtbaren Seriennummern z.B. seriell in dieser bestimmten Reihenfolge an die Steuereinrichtung übermitteln. Alternativ kann sie eine Liste mit sichtbaren Seriennummern an die Steuereinrichtung übermitteln, wobei die Reihenfolge der sichtbaren Seriennummern in dieser Liste derjenigen Reihenfolge entspricht, in der die zugehörigen Bündel mittels der Transporteinrichtung zur Etikettiereinrichtung transportiert werden. Die Reihenfolge geht z.B. aus der Position der Seriennummer in der Liste hervor. Zum Beispiel ist die erste sichtbare Seriennummer der Liste die des zuerst erzeugten Bündels, die zweite sichtbare Seriennummer der Liste die des als zweites erzeugten Bündels,....

In derselben, von der Wertdokumentbearbeitungsvorrichtung vorgegebenen Reihenfolge, in der auch zugehörigen Bündel auf der Transporteinrichtung zu der Etikettiereinrichtung transportiert werden, kann auch die maschinenlesbaren Identifikationen der Bündel von der Steuereinrichtung an die Etikettiereinrichtung übermittelt werden. Hierzu können die maschinenlesbaren Identifikationen der Bündel z.B. seriell in dieser Reihenfolge von der Steuereinrichtung an die Etikettiereinrichtung übermittelt werden oder in Form einer Liste maschinenlesbarer Identifikationen, in der die maschinenlesbare Identifikationen der Bündel in derselben Reihenfolge aufgeführt sind, in der die Bündel auf der Transporteinrichtung zu der Etikettiereinrichtung transportiert werden.

Falls das Überprüfen des jeweiligen Bündels ergibt, dass das jeweilige Bündel richtig etikettiert ist, wird das jeweilige Bündel - ggf. zusammen mit einem oder mehreren weiteren etikettierten Bündeln - mit Hilfe der Verpackungsvorrichtung zu jeweils einer Verpackungseinheit verpackt. Eine Verpackungseinheit kann jeweils genau ein etikettiertes Bündel oder mehr als ein etikettiertes Bündel enthalten, insbesondere zwei etikettierte Bündel.

In einem speziellen Ausführungsbeispiel gehören jeweils zwei einander direkt aufeinander folgend von der Wertdokumentbearbeitungsvorrichtung kommende Bündel zusammen, weil sie aufeinander folgende Seriennummern aufweisen. Dann werden jeweils zwei Bündel, die direkt aufeinander folgend von der Wertdokumentbearbeitungsvorrichtung ausgegeben werden und unmittelbar aufeinander folgende Seriennummern aufweisen, in dieselbe Verpackungseinheit verpackt. Die zwei zusammengehörenden Bündel werden dazu direkt nacheinander mittels der Transporteinrichtung zur Etikettiereinrichtung (zuerst zur Etikettiereinrichtung und dann zur Kontrolleinrichtung oder umgekehrt) transportiert. Falls die Überprüfung der zwei zusammen gehörenden Bündel keinen Fehler aufgezeigt hat, werden sie mit Hilfe der Verpackungsvorrichtung zu jeweils einer Verpackungseinheit verpackt.

Um die Zusammengehörigkeit der beiden Bündel sicherzustellen, werden die zwei zusammengehörenden Bündel beim Etikettieren z.B. mit Etiketten versehen, die dieselbe maschinenlesbare Information aufweisen, welche die Steuereinrichtung für die zwei Bündel gemeinsam bestimmt hat. Bevorzugt sind die zwei sichtbaren Seriennummern der zwei Bündel in der jeweiligen Verknüpfungsinformation mit derselben maschinenlesbaren Information verknüpft oder die zwei sichtbaren Seriennummern sind in derselben maschinenlesbaren Information in codierter Form enthalten. Die zwei zusammengehörenden Bündel werden beim Etikettieren beispielsweise mit identischen Etiketten versehen. Es können aber auch unterschiedliche Etiketten mit denselben maschinenlesbaren Informationen sein. Alternativ können die Etiketten der zwei zusammengehörenden Bündel auch unterschiedliche maschinenlesbare Informationen aufweisen, die in einer Datenbank miteinander verknüpft sind, welche z.B. in der Steuereinrichtung abgespeichert ist.

Um sicherzustellen, dass die richtigen zwei Bündel in dieselbe Verpackungseinheit verpackt werden, kann bei der Überprüfung der Bündel - zusätzlich zur Übereinstimmung der sichtbaren Seriennummern - geprüft werden, ob immer zwei aufeinander folgende Bündel zusammen gehören, z.B. anhand der maschinenlesbaren Informationen der aufeinander folgend geprüfter Bündel. Dazu wird zusätzlich geprüft, ob die beiden Etiketten zweier direkt aufeinander folgend geprüfter Bündel zueinander gehören, insbesondere durch Vergleich der beiden Etiketten der beiden Bündel, die auf diese Bündel aufgebracht sind oder die für diese Bündel zum Aufbringen bereit gestellt wurden. Die maschinenlesbaren Informationen der zwei aufeinander folgenden Bündel können dabei miteinander verglichen werden, z.B. auf Übereinstimmung geprüft werden, oder es kann mit Hilfe der o.g. Datenbank geprüft werden, ob deren maschinenlesbaren Informationen miteinander verknüpft sind. In Abhängigkeit davon, ob bei der Überprüfung festgestellt wird, dass die zwei direkt aufeinander folgend geprüften Bündel zueinander gehören oder nicht, wird die Weiterbearbeitung dieser beiden Bündel fortgesetzt oder angehalten. Beim Fortsetzen der Weiterbearbeitung werden sie z.B. durch die Verpackungsvorrichtung in dieselbe Verpackungseinheit verpackt (und zuvor, falls noch nicht geschehen, etikettiert).

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1: ein Ausführungsbeispiel einer Vorrichtung zur Weiterbearbeitung von Wertdokumenten; und
- Fig. 2a-d: ein erstes etikettiertes Bündel (Fig. 2a) und ein drittes etikettiertes Bündel (Fig. 2d) mit Etikett auf der Seite der sichtbaren Seriennummer und ein zweites etikettiertes Bündel (Fig. 2b), bei dem das Etikett gegenüberliegend zur sichtbaren Seriennummer aufgebracht ist, und
- Fig. 3: ein Ausführungsbeispiel einer Kontrolleinrichtung, und
- Fig. 4: ein von der Kamera der Kontrolleinrichtung erfasstes Kamerabild, und
- Fig. 5a-b: eine Verpackungseinheit mit einem einzigen Bündel (Fig. 5a) und eine Verpackungseinheit mit zwei zusammengehörenden Bündeln (Fig. 5b).

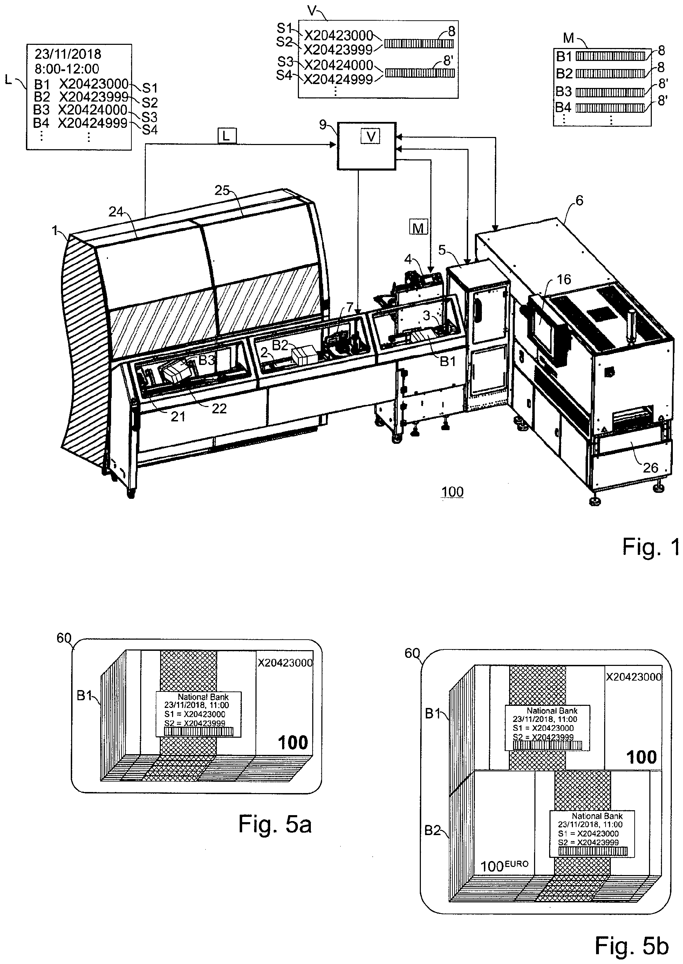

Figur 1 zeigt ein Ausführungsbeispiel einer Vorrichtung 100 zur Weiterbearbeitung von Wertdokumenten, insbesondere Banknoten, die an eine Wertdokumentbearbeitungsvorrichtung 1 angeschlossen ist. Von der Wertdokumentbearbeitungsvorrichtung 1 ist in Fig. 1 nur der rechte Teil gezeigt, der das Ausgabemodul 24 mit den Ausgabefächern 21, 22 und ein optional vorhandenes Schreddermodul 25 umfasst. Die in einem Eingabefach der Wertdokumentbearbeitungsvorrichtung 1 bereitgestellten Wertdokumente werden mit Hilfe eines Vereinzelers einzeln aus dem Eingabefach abgezogen und in der Wertdokumentbearbeitungsvorrichtung 1 entlang eines Transportwegs an einem oder mehreren Sensoren vorbeitransportiert (nicht gezeigt). Dabei werden physikalische Eigenschaften der Wertdokumente erfasst und in entsprechende Sensorsignale umgewandelt, welche in einer Steuer- und Auswerteeinrichtung der Wertdokumentbearbeitungsvorrichtung 1 zur Erkennung und Prüfung der Wertdokumente, beispielsweise hinsichtlich Qualität, Denomination, Echtheit oder Zustand, herangezogen werden. Entlang des Transportwegs angeordnete Weichen werden durch die Steuer- und Auswerteeinrichtung so gesteuert, dass die Wertdokumente in Abhängigkeit vom Ergebnis der Erkennung bzw. Prüfung zu unterschiedlichen Ausgabefächern 21, 22 oder zu dem Schreddermodul 25 transportiert werden. Vor den Ausgabefächern 21, 22 befinden sich z.B. Spiralfachstapler in der Wertdokumentbearbeitungsvorrichtung 1, mit denen die Wertdokumente gestapelt werden.

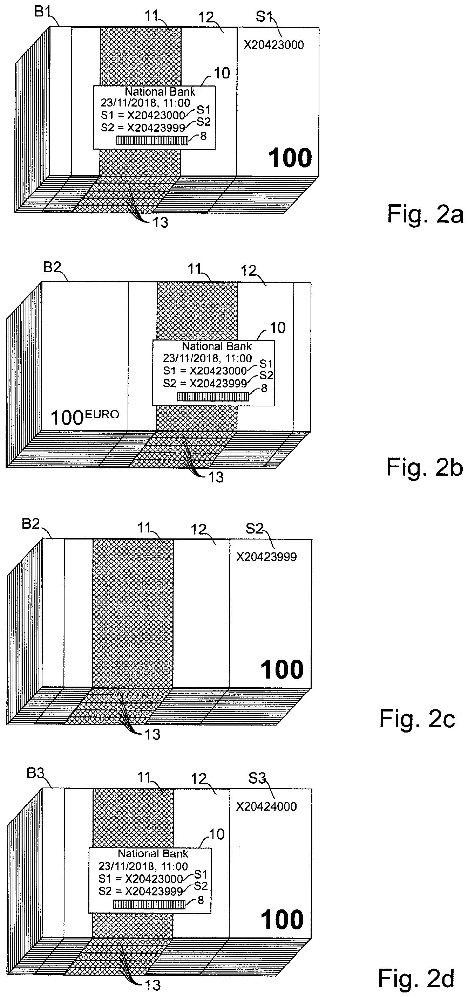

In einer speziellen Variante werden die gestapelten Wertdokumente in einem Banderolierer mittels einer Banderole 11 zu jeweils einem banderolierten Päckchen 13 zusammengefasst, vgl. Fig. 2a-d Die banderolierten Päckchen 13 werden dann einem Päckchenstapler zugeführt und dort zu einem Wertdokumentstapel aus mehreren banderolierten Päckchen 13 gestapelt. Enthält der jeweilige Wertdokumentstapel eine vorgegebene Anzahl an banderolierten Päckchen 13 oder erreicht er eine vorgegebene Stapelhöhe, wird er einem Bündler zugeführt, in welchem die im Wertdokumentstapel befindlichen Päckchen mit einem Umschließungsmaterial 12 zu einem Bündel B1, B2 zusammengebündelt werden, vgl. Fig. 2a-d. Das Umschließungsmaterial 12 dient dazu, den Wertdokumentstapel in dem Bündel B1, B2 physikalisch zusammenzuhalten, damit er beim Weitertransportieren nicht auseinander fällt. Das Umschließungsmaterial 12 kann eine um den Wertdokumentstapel umlaufende Banderole sein oder eine Materialbahn, z.B. eine Folienbahn einer transparenten Folie, die den Wertdokumentstapel ringförmig umschließt, wobei die Enden der Materialbahn zusammengeschweißt sind. Der ringförmig umschlossene Wertdokumentstapel ist z.B. auf vier der sechs Seiten von der Materialbahn bedeckt und an zwei gegenüberliegenden Seiten offen, vgl. Fig. 2a-d. Vorzugsweise wird das jeweilige Bündel mit dem Umschließungsmaterial 12 so umschlossen, dass die sichtbare Seriennummer S1, S2 des Bündels trotz des Umschließungsmaterials von außen gut sichtbar bleibt, z.B. wird nur ein Bereich außerhalb der sichtbaren Seriennummer umschlossen. Alternativ können die vom Spiralfachstapler gestapelten Wertdokumente auch ohne Banderolieren zu einem Wertdokumentstapel loser Wertdokumente gestapelt werden, der direkt dem Bündler zugeführt wird, um die losen Wertdokumente mit dem Umschließungsmaterial zusammenzubündeln.

Die fertigen Bündel B1, B2, B3 werden von der Wertdokumentbearbeitungsvorrichtung 1 in die Ausgabefächer 21, 22 ausgegeben und von dort, ggf. mit Hilfe einer Übergabeklappe, an eine Transporteinrichtung 2 (z.B. ein Förderband) übergeben, das die Bündel B1, B2, B3 zu der Weiterbearbeitungsvorrichtung 100 transportiert. Stehen im Eingabefach der Wertdokumentbearbeitungsvorrichtung 1 kontinuierlich Wertdokumente zur Bearbeitung bereit, so werden kontinuierlich Bündel erzeugt, die an die Transporteinrichtung 2 übergeben werden. Entlang der Transporteinrichtung 2 können die Bündel eine optional vorhandene Wendestation 7 durchlaufen, in der die Bündel bei Bedarf um 180° gedreht werden können. Beispielsweise wird entweder das erste Bündel B1 oder das zweite Bündel B2 gedreht. Im gezeigten Ausführungsbeispiel werden die Bündel von der Transporteinrichtung 2 zu einer Etikettiereinrichung 4 transportiert und danach zu einer Kontrolleinrichtung 5. Alternativ kann entlang der Transporteinrichtung 2 aber auch die Kontrolleinrichtung 5 vor der Etikettiereinrichtung 4 angeordnet sein.

Die Wertdokumente weisen jeweils eine eindeutige Seriennummer auf, die sie von allen anderen Wertdokumenten unterscheidet. Die Wertdokumentbearbeitungsvorrichtung 1 erkennt von jedem bearbeiteten Wertdokument dessen Seriennummer. Um das jeweilige Bündel eindeutig identifizieren zu können, bestimmt die Wertdokumentbearbeitungsvorrichtung 1 für jedes ins Ausgabefach ausgegebene Bündel eine für das Bündel repräsentative sichtbare Seriennummer des jeweilige Bündels, die von außerhalb des Bündels sichtbar ist. Die sichtbare Seriennummer des Bündels ist die Seriennummer des stapelobersten oder stapeluntersten Wertdokuments des jeweiligen Wertdokumentstapels des Bündels. Die übrigen Seriennummern sind nicht sichtbar, weil sie im Inneren des Stapels liegen und daher von einem benachbarten Wertdokument verdeckt sind. Wenn die Wertdokumente nur einseitig mit ihrer Seriennummer ausgestattet sind, hängt es von der Orientierung der Wertdokumente in dem Wertdokumentstapel ab, ob die sichtbare Seriennummer die des stapelobersten oder des stapeluntersten Wertdokuments ist, je nachdem ob die Wertdokumente mit ihrer die Seriennummer aufweisenden Seite nach oben oder nach unten im Stapel liegen.

Die Wertdokumentbearbeitungsvorrichtung 1 übermittelt die sichtbaren Seriennummern S1, S2, S3, S4 der Bündel B1, B2, B3, B4 an eine Steuereinrichtung 9 der Weiterbearbeitungsvorrichtung 100 z.B. in Form einer Seriennummernliste L, vgl. Fig. 1. Die Reihenfolge der sichtbaren Seriennummern in der Liste L entspricht der Reihenfolge, in der die Bündel B1, B2, B3, B4 von der Wertdokumentbearbeitungsvorrichtung 1 an die Transporteinrichtung 2 übergeben auf der Transporteinrichtung 2 zu der Etikettiereinrichtung 4 transportiert werden.

Die Steuereinrichtung der Weiterbearbeitungsvorrichtung 100 ist zur Steuerung der Etikettiereinrichtung 4 und der Kontrolleinrichtung 5 eingerichtet sowie ggf. zur Steuerung der Transporteinrichtungen 2 und ggf. 3. Im gezeigten Beispiel ist die Steuereinrichtung 9 eine eigenständige Einrichtung. Die Steuereinrichtung 9 kann aber zusätzlich auch zur Steuerung der Verpackungsvorrichtung 6 eingerichtet sein und zu diesem Zweck an oder in der Verpackungsvorrichtung 6 angeordnet sein.

Die Steuereinrichtung 9 bestimmt für jede der von der Wertdokumentbearbeitungsvorrichtung 1 übermittelten sichtbaren Seriennummern S1, S2, S3, S4 eine maschinenlesbare Identifikation 8, 8', z.B. einen Barcode, und verknüpft diese maschinenlesbare Identifikation mit der jeweiligen Seriennummer in einer Verknüpfungsinformation V, die in der Steuereinrichtung 9 abgespeichert wird. Beispielsweise ist die jeweilige sichtbare Seriennummer in codierter Form in der maschinelesbaren Identifikation enthalten. Bei dem in Fig. 1 gezeigten Beispiel der Verknüpfungsinformation V ist jeweils zwei sichtbaren Seriennummern S1, S2 dieselbe maschinenlesbare Identifikation 8 zugeordnet, wobei beide sichtbaren Seriennummern in der maschinelesbaren Identifikation 8 in codierter Form enthalten sind. Alternativ kann aber auch für jede sichtbare Seriennummer eine eigene maschinenlesbare Identifikation bestimmt werden.

Die maschinenlesbaren Identifikationen 8, 8' der Bündel B1, B2, B3, B4 werden von der Steuereinrichtung 9 an die Etikettiereinrichtung 4 übermittelt, z.B. in Form einer Liste M maschinenlesbarer Identifikationen, in der die maschinenlesbare Identifikationen der Bündel in derselben Reihfolge aufgeführt sind, in der die Bündel B1, B2, B3, B4 von der Wertdokumentbearbeitungsvorrichtung 1 an die Transporteinrichtung 2 übergeben wurden.

Die Etikettiereinrichtung 4 weist z.B. einen Etikettendrucker (nicht gezeigt) auf, der für jedes der Bündel B1, B2, B3, B4 ein Etikett erstellt und eine Befestigungseinrichtung (nicht gezeigt), die die gedruckten Etiketten an dem Umschließungsmaterial 12 des jeweiligen Bündels befestigt (im Fall selbstklebender Etiketten aufklebt), sowie eine Steuereinrichtung (nicht gezeigt) zur Steuerung des Etikettendruckers und der Befestigungseinrichtung. Die Steuereinrichtung der Etikettiereinrichtung sorgt dafür, dass Etiketten gemäß der Liste M maschinenlesbarer Informationen mit den maschinenlesbaren Information 8, 8' versehen werden. Der Etikettendrucker druckt dazu auf jedes Etikett diejenige in der Liste M enthaltene maschinenlesbare Identifikation auf, die mit der sichtbaren Seriennummer des jeweiligen Bündels verknüpft ist, das mit dem jeweiligen Etikett etikettiert werden soll. Für die Bündel B1, B2, B3, B4 druckt der Etikettendrucker demzufolge zuerst zwei Etiketten mit der maschinenlesbaren Information 8, die für die Bündel B1 und B2 erstellt werden, und danach zwei Etiketten mit der maschinenlesbaren Information 8', die für die Bündel B3 und B4 erstellt werden. Ein Beispiel eines für die Bündel B1 und B2 erstellten Etiketts ist in Fig. 2a und 2b dargestellt.

Diese Etiketten werden auf die an der Etikettiereinrichtung 4 ankommenden Bündel dann in derjenigen Reihenfolge befestigt, in der die maschinenlesbarer Identifikationen in der Liste M angeführt sind, d.h. in der Reihenfolge, in der die Bündel B1, B2, B3, B4 von der Wertdokumentbearbeitungsvorrichtung 1 an die Transporteinrichtung 2 übergeben wurden. Das jeweilige Etikett wird dabei auf dem Umschließungsmaterial 12 des jeweiligen Bündels in einem Bereich des jeweiligen Bündels befestigt, der außerhalb der sichtbaren Seriennummer des jeweiligen Bündels liegt. Die etikettierten Bündel B1, B2, B3, B4 werden dann mit Hilfe einer Transporteinrichtung 3 von der Etikettiereinrichtung 4 zu der Kontrolleinrichtung 5 und dann zu einer Verpackungsvorrichtung 6 transportiert.

In Fig. 2a und 2b sind beispielhaft zwei etikettierte Bündel B1, B2 gezeigt, bei denen jeweils 5 banderolierte Wertdokumentpäckchen 13, die jeweils mit einer Banderole 11 banderoliert wurden, mit einer Folienbahn 12 ringförmig umschlossen sind. Auf der Folienbahn 12 ist jeweils ein Etikett 10 befestigt. In diesem Beispiel sind auf dem Etikett 10 das Datum und die Uhrzeit der Weiterbearbeitung und die maschinenlesbare Identifikation 8 aufgedruckt, die mit der sichtbaren Seriennummer des jeweiligen Bündels verknüpft ist. Optional kann auch die sichtbare Seriennummern des jeweiligen Bündels im Klartext auf das Etikett 10 gedruckt sein. Im gezeigten Beispiel sind die zwei sichtbaren Seriennummern S1 und S2 der beiden Bündel B1 und B2 im Klartext aufgedruckt, wie es für das später erläuterte spezielle Ausführungsbeispiel bevorzugt ist. Alternativ kann aber auch nur jeweils die eine sichtbare Seriennummer des jeweiligen Bündels im Klartext auf das jeweiligen Etikett gedruckt sein.

Bei dem Bündel B1 wurde diejenige Seite des Bündels mit dem Etikett 10 versehen, auf der die Oberseite des stapelobersten Wertdokuments liegt, die auch die sichtbare Seriennummer des Bündels trägt, vgl. Fig. 2a. Bei dem Bündel B2 wurde diejenige Seite des Bündels mit dem Etikett 10 versehen, auf der die Unterseite des stapeluntersten Wertdokuments liegt, auf der keine sichtbare Seriennummer des Bündels liegt, vgl. Fig. 2b. Die dieser Seite gegenüber liegende Seite des Bündels, die die sichtbare Seriennummer des Bündels B2 trägt, ist in Fig. 2c abgebildet.

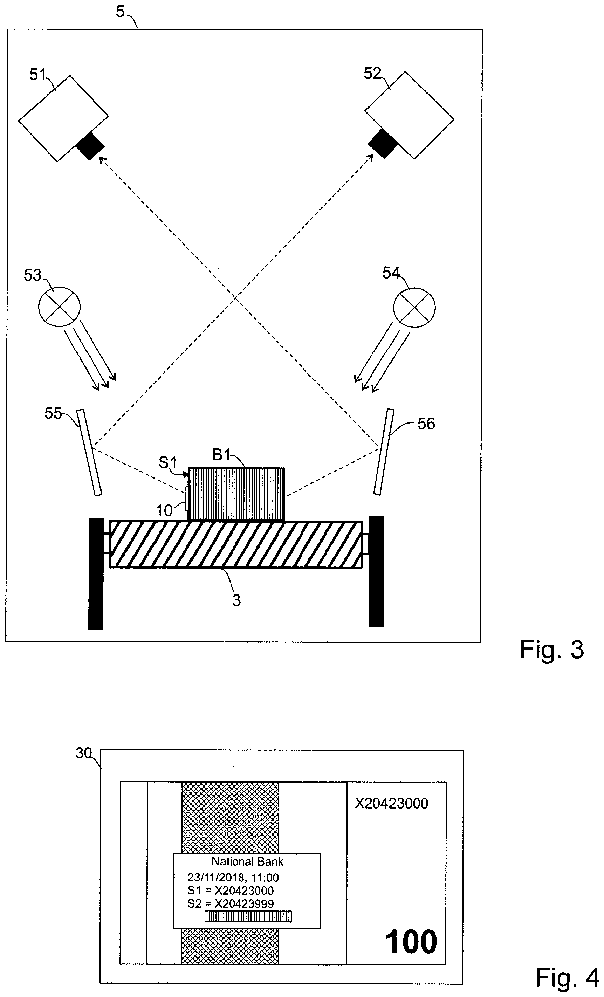

In Fig. 3 ist beispielhaft eine Kontrolleinrichtung 5 gezeigt, die zwei Kameras 51, 52 aufweist. Das Bündel B1 wurde von der Transporteinrichtung 3 in die Kontrolleinrichtung 5 transportiert. Zur Beleuchtung des Bündels B1 dienen zwei Lichtquellen 53, 54, die zwei einander gegenüber liegende Seiten des Bündels B1 beleuchten, in Fig. 3 die linke und rechte Seite des Bündels B1. Über zwei Spiegel 55, 56 werden die beiden einander gegenüber liegenden Bündelseiten auf die Kameras 51, 52 abgebildet. Zum Erfassen der beiden Kamerabilder wird der Transport des Bündels B1 kurzzeitig angehalten. Die Kamera 52 nimmt ein Bild 30 der linken Bündelseite auf, an der das Etikett 10 des Bündels B1 befestigt ist und auf der die sichtbare Seriennummer S1 des Bündels B1 liegt. Das von der Kamera 52 aufgenommene Bild mit dem Etikett und der sichtbaren Seriennummer S1 ist in Fig. 4 gezeigt.

Falls sich die sichtbare Seriennummer nicht auf der Seite des Etiketts, sondern der gegenüber liegenden Bündelseite befindet, wie es bei dem Bündel B2 aus Fig. 2b, 2c der Fall ist, ist die sichtbare Seriennummer auf dem von der anderen Kamera 51 aufgenommenen Bild abgebildet und das Etikett auf dem der Kamera 52. Die Information, auf welchem der aufgenommenen Bilder die Seriennummer und auf welchem das Etikett erwartet wird, kann in der Steuereinrichtung 9 für jedes Bündel hinterlegt sein. Im vorliegenden Beispiel der Bündel B1, B2, B3, B4 befinden sich die sichtbare Seriennummer und das Etikett abwechselnd auf derselben Bündelseite (bei B1 und B3) und auf gegenüberliegenden (bei B2 und B4) Bündelseiten.

Um die richtige Etikettierung des Bündels B1 zu überprüfen, wird aus dem aufgenommenen Bild 30 die Seriennummer des Bündels B1 extrahiert, die dieses tatsächlich aufweist (und als tatsächliche Seriennummer bezeichnet wird) und mit derjenigen Seriennummer verglichen, die mit der maschinenlesbaren Identifikation 8 des Etiketts verknüpft ist. Die Überprüfung wird bevorzugt durch die Steuereinrichtung 9 durchgeführt, an die die von den Kameras 51, 52 aufgenommenen Bilder übermittelt werden. Zur Extrahierung der Seriennummer kann es hilfreich sein, dass die Position der Seriennummer innerhalb des Wertdokuments, die für jede Wertdokumentart unterschiedlich sein kann, von der Wertdokumentbearbeitungsvorrichtung 1 an die Steuereinrichtung 9 übermittelt wird. Die Steuereinrichtung 9 liest aus dem an dem dieser Position liegenden Bildabschnitt die tatsächliche Seriennummer X20423000 mittels eines bekannten Zeichenerkennungsverfahrens.

Dem Bildabschnitt des Bilds 30, in dem das Etikett 10 abgebildet ist, entnimmt die Steuereinrichtung 9 die maschinenlesbare Identifikation 8 des jeweiligen Etiketts 10. Anhand der in der Steuereinrichtung 9 abgespeicherten Verknüpfungsinformation V ermittelt die Steuereinrichtung 9 dann die mit der maschinenlesbaren Information 8 des Bündels B1 verknüpfte sichtbare Seriennummer X20423000 des Bündels B1. Anschließend vergleicht die Steuereinrichtung 9 die tatsächliche sichtbare Seriennummer X20423000 des Bündels B1 mit den von dem Etikett 10 des Bündels B1 durch die maschinenlesbaren Identifikation 8 angegebenen sichtbaren Seriennummern X20423000 und X20423999. Da diese tatsächliche Seriennummer mit einer dieser beiden Seriennummern übereinstimmt, wird das etikettierte Bündel B1 als korrekt etikettiert bewertet.

Falls jedoch die Reihenfolge der Bündel B1, B2, B3, ..., in der die Bündel zu der Etikettiereinrichtung 4 gelangen -z.B. durch Eingreifen eines Bedieners - verändert wird und irrtümlich das Bündel B3 mit dem für das Bündel B1 vorgesehenen Etikett 10 versehen wird, vgl. Fig. 2d, so wird dies bei der Überprüfung der richtigen Etikettierung erkannt. Denn in diesem Fall wird aus dem von der Kamera 52 aufgenommenen Bild als tatsächliche sichtbare Seriennummer S3 (X20424000) extrahiert, während das Etikett 10 durch die maschinenlesbare Identifikation 8 die sichtbaren Seriennummern X20423000 und X20423999 angibt. Da hier die Seriennummern nicht übereinstimmen, wird das Bündel B3 aus Fig. 2d, das versehentlich mit dem für das Bündel B1 vorgesehenen Etikett 10 versehen ist, als falsch etikettiert bewertet.

Wird ein Bündel als falsch etikettiert bewertet, so verhindert die Steuereinrichtung das Verpacken durch die Verpackungsvorrichtung 6. Zum Beispiel kann die Steuereinrichtung 9 dazu einen Stopp der Transportvorrichtung 3 veranlassen und an der Bedienerschnittstelle 16 eine entsprechende Fehlermeldung an den Bediener ausgeben, die den Bediener dazu auffordert, das falsch etikettierte Bündel zu entnehmen. Um auch im Fall nicht korrekt etikettierter Bündel einen kontinuierlichen Abtransport der Bündel zu gewährleisten, kann die Steuereinrichtung 9 alternativ trotzdem den Transport der Bündel zur Verpackungsvorrichtung 6 veranlassen und nur das Verpacken der nicht korrekt etikettierten Bündel verhindern, z.B. indem sie die Verpackungsvorrichtung zum Aussortieren der jeweiligen nicht korrekt etikettierten Bündel veranlasst, damit diese unverpackt aus der Verpackungsvorrichtung 6 ausgegeben werden.

Diejenigen etikettierten Bündel, die bei der Überprüfung als korrekt etikettiert bewertet werden, werden von der Steuereinrichtung 9 an die Verpackungsvorrichtung weitergeleitet. Die Steuereinrichtung 9 veranlasst die Transporteinrichtung 3, diese Bündel zur Verpackungsvorrichtung 6 zu transportieren, die die Bündel dann mit Verpackungsmaterial verpackt und an einer Ausgabeöffnung 26 ausgibt. Zum Beispiel wird das einzelne Bündel B1 von der Verpackungsvorrichtung 6 mit einem Verpackungsmaterial, z.B. einer Schrumpffolie, in eine Verpackungseinheit 60 verpackt, vgl. Fig. 5a.

In der Verpackungsvorrichtung 6 können eines oder mehrere Bündel mit einer dafür vorgesehenen Verpackung verpackt werden. Die beim Verpacken erhaltenen Verpackungseinheiten 60 mit den darin jeweils verpackten Bündeln stehen dann für eine weitere Verwendung bzw. Bearbeitung, etwa einem Weitertransport und/ oder einer Lagerung der Bündel zur Verfügung.

Bei der Verpackung kann es sich um ein flexibles Verpackungsmaterial handeln, mit dem das oder die jeweiligen Bündel umwickelt werden, oder um einen bereits vorhandenen Behälter, der mit einem oder mehreren Bündeln gefüllt wird und ggf. anschließend verschlossen wird. Der Behälter mit den darin eingebrachten etikettierten Bündeln bildet dann die Verpackungseinheit.

In einem speziellen Ausführungsbeispiel wird die Wertdokumentbearbeitungsvorrichtung 1 zur Prüfung von neu produzierten Wertdokumenten verwendet, deren Seriennummern fortlaufend sind. Beispielsweise werden unmittelbar nacheinander die 1000 Wertdokumente der fortlaufenden Seriennummern X20423000 bis X20423999 bearbeitet (danach die 1000 Wertdokumente mit den X20423000 bis X20423999,...). Werden diese fortlaufenden Seriennummern von der Wertdokumentbearbeitungsvorrichtung 1 im Tandembetrieb, d.h. abwechselnd jeweils als Bündel aus 500 Wertdokumenten, in zwei verschiedene Ausgabefächer ausgegeben, so sind die Seriennummern der Wertdokumente, die in einem einzigen dieser ausgegebenen 500er-Bündel B1 landen, nicht durchgehend fortlaufend, sondern nur die zwei aufeinanderfolgenden 500er-Bündel B1 und B2 zusammen weisen die Wertdokumente mit durchgehend fortlaufenden Seriennummern auf, d.h. alle 1000 Wertdokumente der Seriennummern X20423000 bis X20423999. So gehören jeweils zwei einander direkt aufeinander folgend von der Wertdokumentbearbeitungsvorrichtung 1 kommende Bündel B1, B2 zusammen, weil sie aufeinander folgende Seriennummern aufweisen. Um das Zusammenbleiben der beiden Bündel B1 und B2 sicherzustellen, werden sie bevorzugt in eine einzige Verpackungseinheit 60 verpackt, vgl. Fig. 5b.

Um die Zusammengehörigkeit der beiden Bündel B1,B2 sicherzustellen, erhält jedes dieser zwei Bündel B1,B2 zudem ein Etikett 10, auf dem die maschinenlesbare Informationen 8 aufgebracht ist, die mit den zwei sichtbaren Seriennummern S1, S2 der zwei Bündel B1, B2 verknüpft sind. Zur Vereinfachung können die beiden zusammengehörenden Bündel B1, B2 identische Etiketten 10 erhalten, vgl. Fig. 2a, 2b und 5b. Auf jedem Etikett 10 sind neben dem Datum und der Uhrzeit und der maschinenlesbaren Identifikation 8, auch die zwei sichtbaren Seriennummern S1 und S2 der beiden Bündel B1 und B2 im Klartext gedruckt.

Falls der Bediener die richtige Reihenfolge der Bündel vertauscht, kann es auch passieren, dass zwei nicht zusammengehörende Bündel in ein Verpackungseinheit 60 verpackt werden. Falls die Vorrichtung z.B. einen Zugriff des Bedieners an einer Position zwischen der Etikettiereinrichtung 4 und der Kontrolleinrichtung 5 erlaubt, kann dieser dort die Reihenfolge der Bündel vertauschen, ohne dass dies eine falsche Etikettierung der Bündel zur Folge hat. Die oben genannte Überprüfung der richtigen Etikettierung würde dann keine Fehler erkennen. Bei der Überprüfung der Bündel kann die Steuereinrichtung 9 daher bei Bedarf anhand der von der Kontrolleinrichtung 5 aufgenommenen Bilder zusätzlich prüfen, ob immer zwei aufeinander folgende Bündel zusammen gehören, z.B. durch Vergleich der maschinenlesbaren Informationen 8 der beiden Etiketten 10 der aufeinanderfolgenden Bündel B1, B2 oder durch Vergleichen der Etiketten 10 auf Übereinstimmung. Falls sich bei diesem zusätzlichen Überprüfen ergibt, dass zwei aufeinander folgende Bündel nicht zusammengehören, wird die Weiterbearbeitung der beiden Bündel, insbesondere die Verpackung der beiden Bündel, angehalten und eine entsprechende Fehlermeldung an den Bediener ausgegeben . Falls sich herausstellt, dass zwei aufeinander folgende Bündel zusammengehören werden die beiden Bündel in dieselbe Verpackungseinheit 60 verpackt, vgl. Fig. 5b

## Patentansprüche

1. Verfahren zur Weiterbearbeitung von Wertdokumenten, die mit einer Wertdokumentbearbeitungsvorrichtung (1) zu Wertdokumentstapeln gestapelt wurden und mit einem Umschließungsmaterial (12) zu einem Bündel (B1-B4) zusammengebündelt wurden, mit den Schritten:
- Bestimmen der sichtbaren Seriennummer (S1-S4) des jeweiligen Bündels (B1-B4) durch die Wertdokumentbearbeitungsvorrichtung (1),
- Übermitteln der sichtbaren Seriennummer (S1-S4) des jeweiligen Bündels von der Wertdokumentbearbeitungsvorrichtung (1) an eine Steuereinrichtung (9),
- Bestimmen einer maschinenlesbaren Identifikation (8, 8') für das jeweilige Bündel durch die Steuereinrichtung (9),
- Erzeugen einer Verknüpfungsinformation (V) durch die Steuereinrichtung (9), die angibt, mit welcher sichtbaren Seriennummer (S1-S4) die jeweilige maschinenlesbare Identifikation (8, 8') verknüpft ist,
- Übermitteln der maschinenlesbaren Identifikation (8) von der Steuereinrichtung an eine Etikettiereinrichtung (4), die zum Etikettieren des jeweiligen mit dem Umschließungsmaterial (12) zu einem Bündel (B1-B4) zusammengebündelten Bündels eingerichtet ist,
- Erstellen eines Etiketts (10) für das jeweilige Bündel mittels der Etikettiereinrichtung (4), wobei auf das jeweilige Etikett die von der Steuereinrichtung übermittelte maschinenlesbare Identifikation (8, 8') aufgebracht wird,
- Transportieren des jeweiligen aus der Wertdokumentbearbeitungsvorrichtung ausgegebenen und mit dem Umschließungsmaterial (12) zu einem Bündel (B1-B4) zusammengebündelten Bündels (B1-B4) zu der Etikettiereinrichtung (4) mit Hilfe einer Transporteinrichtung (2), um das jeweilige Bündel mit dem für das jeweilige Bündel erstellten Etikett zu etikettieren,
- Erfassen des jeweiligen Bündels (B1-B4) durch eine Kontrolleinrichtung (5), die mindestens eine Kamera (51) aufweist, mit der sie ein Bild (30) des jeweiligen Bündels aufnimmt, auf dem die sichtbare Seriennummer (S1-S4) des jeweiligen Bündels und ggf. auch das Etikett (10) des jeweiligen Bündels abgebildet ist,
- Überprüfen des jeweiligen Bündels, wobei beim Überprüfen des jeweiligen Bündels
- die tatsächliche sichtbare Seriennummer (S1) des jeweiligen Bündels (B1-B4) aus dem von der Kontrolleinrichtung (5) aufgenommenen Bild (30) extrahiert wird,
- die sichtbare Seriennummer (S1-S4) ermittelt wird, die zu der maschinenlesbaren Identifikation (8, 8') desjenigen Etiketts gehört, das für das jeweilige Bündel (B1-B4) erstellt wurde, und
- die tatsächliche sichtbare Seriennummer (S1-S4) des jeweiligen Bündels mit zu der maschinenlesbaren Identifikation (8, 8') des jeweiligen Etiketts gehörenden sichtbaren Seriennummer verglichen wird,
wobei in Abhängigkeit davon, ob das Überprüfen des jeweiligen Bündels ergibt, dass die tatsächliche sichtbare Seriennummer (S1-S4) des jeweiligen Bündels mit der zu der maschinenlesbaren Identifikation (8, 8') des jeweiligen Etiketts gehörenden sichtbaren Seriennummer übereinstimmt oder nicht, die Weiterbearbeitung des jeweiligen Bündels, im Fall einer Übereinstimmung fortgesetzt wird, oder, im Fall einer Nichtübereinstimmung angehalten wird.

2. Verfahren nach Anspruch 1, **dadurch gekennzeichnet, dass** das jeweilige Bündel mit dem für das jeweilige Bündel erstellten Etikett etikettiert wird, bevor das jeweilige Bündel durch die Kontrolleinrichtung (5) erfasst wird, so dass die Kontrolleinrichtung (5) das bereits etikettierte Bündel erfasst.

3. Verfahren nach Anspruch 1, **dadurch gekennzeichnet, dass** das jeweilige Bündel durch die Kontrolleinrichtung (5) erfasst wird, bevor das jeweilige Bündel mit dem für das jeweilige Bündel erstellten Etikett etikettiert wird, so dass die Kontrolleinrichtung (5) das noch nicht etikettierte Bündel erfasst.

4. Verfahren nach Anspruch 2, **dadurch gekennzeichnet, dass** die Kontrolleinrichtung (5), zum Erfassen der maschinenlesbaren Identifikation des jeweiligen Etiketts, die maschinenlesbare Identifikation (8, 8') des jeweiligen Etiketts (10) aus dem aufgenommenen Bild (30) oder einem anderen von der Kontrolleinrichtung (5) aufgenommenen Bild extrahiert, das die Kontrolleinrichtung (5) von dem jeweiligen Bündel aufgenommen hat, wobei das andere Bild insbesondere von der dem aufgenommenen Bild gegenüberliegenden Seite des Bündels aufgenommen wird, beispielsweise von einer zweiten Kamera (52) der Kontrolleinrichtung (5), die auf die gegenüberliegende Seite des Bündels (B1-B4) gerichtet ist.

5. Verfahren nach einem der vorhergehenden Ansprüche, **dadurch gekennzeichnet, dass** das Umschließungsmaterial ein Vorverpackungsmaterial ist, insbesondere eine Materialbahn (12), mit der das Bündel ringförmig umschlossen ist, z.B. eine Folienbahn.

6. Verfahren nach einem der vorhergehenden Ansprüche, **dadurch gekennzeichnet, dass** das Umschließungsmaterial (12) eine Banderole ist.

7. Verfahren nach einem der vorhergehenden Ansprüche, **dadurch gekennzeichnet, dass** der jeweilige Wertdokumentstapel, der zu einem Bündel (B1-B4) zusammengebündelt ist, ein Stapel loser Wertdokumente ist oder einen Stapel aus mehreren banderolierten Päckchen ist, die zu einem Bündel (B1-B4) zusammenbündelt sind.

8. Verfahren nach einem der vorhergehenden Ansprüche, **dadurch gekennzeichnet, dass** die von der Wertdokumentbearbeitungsvorrichtung (1) geprüften Wertdokumente zu einer Vielzahl von Bündeln (B1-B4) zusammengebündelt werden und diese derart an die Transporteinrichtung (2) übergeben werden, dass die Bündel in einer bestimmten Reihenfolge nacheinander mittels der Transporteinrichtung (2) zu der Etikettiereinrichtung (4) transportiert werden, und dass die Wertdokumentbearbeitungsvorrichtung (1) die sichtbaren Seriennummern (S1-S4) der an die Transporteinrichtung übergebenen Bündel (B1-B4) mit derselben Reihenfolge an die Steuereinrichtung (9) übermittelt, in der die zugehörigen Bündel (B1-B4) vorgesehen sind, durch die Transporteinrichtung (2) zu der Etikettiereinrichtung (4) transportiert zu werden.

9. Verfahren nach Anspruch 8, **dadurch gekennzeichnet, dass** die Wertdokumentbearbeitungsvorrichtung (1) die sichtbaren Seriennummern (S1-S4) seriell in dieser Reihenfolge an die Steuereinrichtung (9) übermittelt oder eine Liste (L) mit sichtbaren Seriennummern an die Steuereinrichtung (9) übermittelt, bei der die Reihenfolge der sichtbaren Seriennummern derjenigen Reihenfolge entspricht, in der die zugehörigen Bündel (B1-B4) vorgesehen sind, durch die Transporteinrichtung (2) zu der Etikettiereinrichtung (4) transportiert zu werden.

10. Verfahren nach Anspruch 9, **dadurch gekennzeichnet, dass** die maschinenlesbaren Identifikationen (8, 8') der Bündel (B1-B4) von der Steuereinrichtung (9) an die Etikettiereinrichtung (4) mit derselben Reihenfolge übermittelt werden, in der die zugehörigen Bündel (B1-B4) vorgesehen sind, durch die Transporteinrichtung (2) zu der Etikettiereinrichtung (4) transportiert zu werden.

11. Verfahren nach einem der vorhergehenden Ansprüche, **dadurch gekennzeichnet, dass** jeweils zwei Bündel (B1, B2), deren Wertdokumentstapel einander direkt aufeinander folgend von der Wertdokumentbearbeitungsvorrichtung (1) ausgegeben und mittels der Transporteinrichtung (2) zur Etikettiereinrichtung (4) transportiert wurden, und deren Überprüfung keinen Fehler aufgezeigt hat, mit Hilfe einer Verpackungsvorrichtung (6) zu jeweils einer Verpackungseinheit (60) verpackt werden.

12. Verfahren nach einem der vorhergehenden Ansprüche, **dadurch gekennzeichnet, dass** jeweils zwei Bündel (B1, B2), deren Wertdokumentstapel einander direkt aufeinander folgend von der Wertdokumentbearbeitungsvorrichtung (1) ausgegeben und mittels der Transporteinrichtung (2) zur Etikettiereinrichtung (4) transportiert wurden, beim Etikettieren mit Etiketten (10) versehen werden, die dieselbe maschinenlesbare Information aufweisen.

13. Verfahren nach Anspruch 12, **dadurch gekennzeichnet, dass** die zwei sichtbaren Seriennummern (S1, S2) der zwei Bündel in der jeweiligen Verknüpfungsinformation (V) mit derselben maschinenlesbaren Information verknüpft sind und/oder die zwei sichtbaren Seriennummern (S1, S2) der zwei Bündel in derselben maschinenlesbare Information in codierter Form enthalten sind.

14. Verfahren nach einem der vorhergehenden Ansprüche, **dadurch gekennzeichnet dass** beim Überprüfen der Bündel (B1, B2) zusätzlich geprüft wird, ob jeweils zwei Bündel (B1, B2), die direkt aufeinander folgend zu der Etikettiereinrichtung (4) transportiert werden und geprüft werden, zueinander gehören, und in Abhängigkeit davon, ob die zwei direkt aufeinander folgenden Bündel zueinander gehören oder nicht, die Weiterbearbeitung der zwei Bündel fortgesetzt oder angehalten wird, wobei sie im Fall der Fortsetzung der Weiterbearbeitung insbesondere durch eine Verpackungsvorrichtung (6) in dieselbe Verpackungseinheit (60) verpackt werden.

15. Vorrichtung (100) zur Weiterbearbeitung von Wertdokumenten, die mit einer Wertdokumentbearbeitungsvorrichtung (1) bearbeitet und zu Wertdokumentstapeln gestapelt wurden und die mit einem Umschließungsmaterial (12) zu einem Bündel (B1-B4) zusammengebündelt wurden, wobei die Wertdokumentbearbeitungsvorrichtung (1) die jeweilige sichtbare Seriennummer (S1-S4) des jeweiligen Bündels (B1-B4) bestimmt hat, wobei die Vorrichtung (100) aufweist:
- eine Steuereinrichtung (9), die mit der Wertdokumentbearbeitungsvorrichtung verbunden ist und dazu eingerichtet ist, die jeweilige von der Wertdokumentbearbeitungsvorrichtung (1) bestimmte sichtbare Seriennummer (S1-S4) des jeweiligen Bündels von der Wertdokumentbearbeitungsvorrichtung zu verarbeiten, und eine maschinenlesbare Identifikation (8, 8') für das jeweilige Bündel zu bestimmen und eine Verknüpfungsinformation (V) zu erzeugen, die angibt, mit welcher sichtbaren Seriennummer (S1-S4) die jeweilige maschinenlesbare Identifikation (8, 8') verknüpft ist,
- eine Etikettiereinrichtung (4), die mit der Steuereinrichtung (9) verbunden ist und dazu eingerichtet ist, eine von der Steuereinrichtung an die Etikettiereinrichtung übermittelte maschinenlesbare Identifikation (8, 8') zu verarbeiten, und die zum Erstellen eines Etiketts (10) eingerichtet ist, das die von der Steuereinrichtung übermittelte maschinenlesbare Identifikation (8, 8') aufweist, und die zum Etikettieren des jeweiligen aus der Wertdokumentbearbeitungsvorrichtung ausgegebenen und mit dem Umschließungsmaterial (12) zu einem Bündel (B1-B4) zusammengebündelten Bündels eingerichtet ist,
- ggf. eine Transporteinrichtung (2) zum Transportieren des jeweiligen aus der Wertdokumentbearbeitungsvorrichtung ausgegebenen und mit dem Umschließungsmaterial (12) zu einem Bündel (B1-B4) zusammengebündelten Bündels (B1-B4) zu der Etikettiereinrichtung (4), um das jeweilige Bündel mit dem für das jeweilige Bündel erstellten Etikett zu etikettieren,
- eine Kontrolleinrichtung (5) zum Erfassen des jeweiligen Bündels, die mindestens eine Kamera (51) aufweist, die derart angeordnet ist, dass sie ein Bild (30) des jeweiligen Bündels aufnehmen kann, auf dem die sichtbare Seriennummer des jeweiligen Bündels und ggf. dessen Etikett abgebildet sind,
wobei die Kontrolleinrichtung (5) und/oder die Steuereinrichtung (9) zum Überprüfen des jeweiligen Bündels eingerichtet ist, und dazu eingerichtet ist, beim Überprüfen des jeweiligen Bündels (B1-B4)
- aus dem von der Kontrolleinrichtung (5) aufgenommenen Bild (30), die tatsächliche sichtbare Seriennummer (S1-S4) des jeweiligen Bündels (B1-B4) zu extrahieren,
- die sichtbare Seriennummer (S1-S4) zu ermitteln, die zu der maschinenlesbaren Identifikation (8, 8') desjenigen Etiketts (10) gehört, das für das jeweilige Bündel erstellt wurde,
- die tatsächliche sichtbare Seriennummer (S1-S4) des jeweiligen Bündels mit der zu der maschinenlesbaren Identifikation (8, 8') des jeweiligen Etiketts gehörenden sichtbaren Seriennummer zu vergleichen,
- in Abhängigkeit davon, ob das Überprüfen des jeweiligen Bündels ergibt, dass die tatsächliche sichtbare Seriennummer (S1-S4) des jeweiligen Bündels mit der zu der maschinenlesbaren Identifikation (8, 8') des jeweiligen Etiketts gehörenden sichtbaren Seriennummer übereinstimmt oder nicht, die Weiterbearbeitung des jeweiligen Bündels, im Fall einer Übereinstimmung fortgesetzt wird, oder, im Fall einer Nichtübereinstimmung angehalten wird.

## Claims

1. Method for the further processing of documents of value that have been stacked using a document-of-value processing device (1) to form stacks of documents of value and have been bundled together with an envelope material (12) to form a bundle (B1-B4), comprising the following steps:
- the document-of-value processing device (1) determining the visible serial number (S1-S4) of the respective bundle (B1-B4),
- transmitting the visible serial number (S1-S4) of the respective bundle from the document-of-value processing device (1) to a controller (9),
- the controller (9) determining a machine-readable identification (8, 8') for the respective bundle,
- the controller (9) generating linking information (V) indicating the visible serial number (S1-S4) with which the respective machine-readable identification (8, 8') is linked,
- transmitting the machine-readable identification (8) from the controller to a labeller (4) that is configured to label the respective bundle bundled together with the envelope material (12) to form a bundle (B1-B4),
- creating a label (10) for the respective bundle by way of the labeller (4), wherein the machine-readable identification (8, 8') transmitted by the controller is applied to the respective label,
- transporting the respective bundle (B1-B4) output from the document-of-value processing device and bundled together with the envelope material (12) to form a bundle (B1-B4) to the labeller (4) using a transport apparatus (2) in order to label the respective bundle with the label created for the respective bundle,
- a monitoring apparatus (5) recording the respective bundle (B1-B4), the monitoring apparatus having at least one camera (51) by way of which it captures an image (30) of the respective bundle, said image depicting the visible serial number (S1-S4) of the respective bundle and where applicable also the label (10) of the respective bundle,
- checking the respective bundle, wherein, when checking the respective bundle
- the actual visible serial number (S1) of the respective bundle (B1-B4) is extracted from the image (30) captured by the monitoring apparatus (5),
- the visible serial number (S1-S4) that belongs to the machine-readable identification (8, 8') of that label that was created for the respective bundle (B1-B4) is determined, and
- the actual visible serial number (S1-S4) of the respective bundle is compared with the visible serial number belonging to the machine-readable identification (8, 8') of the respective label,
wherein, depending on whether or not the check of the respective bundle reveals that the actual visible serial number (S1-S4) of the respective bundle matches the visible serial number belonging to the machine-readable identification (8, 8') of the respective label, the respective bundle continues to be further processed in the event of a match, or the respective bundle stops being further processed in the event of absence of a match.

2. Method according to Claim 1, **characterized in that** the respective bundle is labelled with the label created for the respective bundle before the respective bundle is recorded by the monitoring apparatus (5), such that the monitoring apparatus (5) records the already labelled bundle.

3. Method according to Claim 1, **characterized in that** the respective bundle is recorded by the monitoring apparatus (5) before the respective bundle is labelled with the label created for the respective bundle, such that the monitoring apparatus (5) records the bundle that has not yet been labelled.

4. Method according to Claim 2, **characterized in that** the monitoring apparatus (5), in order to record the machine-readable identification of the respective label, extracts the machine-readable identification (8, 8') of the respective label (10) from the captured image (30) or another image captured by the monitoring apparatus (5) that the monitoring apparatus (5) has captured of the respective bundle, wherein the other image is captured in particular from that side of the bundle opposite the captured image, for example by a second camera (52) of the monitoring apparatus (5) pointed at the opposite side of the bundle (B1-B4).

5. Method according to one of the preceding claims, **characterized in that** the envelope material is a prepackaging material, in particular a material web (12) that surrounds the bundle in the manner of a circle, for example a film web.

6. Method according to one of the preceding claims, **characterized in that** the envelope material (12) is a banderole.

7. Method according to one of the preceding claims, **characterized in that** the respective stack of documents of value that is bundled together to form a bundle (B1-B4) is a stack of loose documents of value or a stack consisting of multiple banded-together packages that are bundled together to form a bundle (B1-B4).

8. Method according to one of the preceding claims, **characterized in that** the documents of value tested by the document-of-value processing device (1) are bundled together to form a multiplicity of bundles (B1-B4) and these are transferred to the transport apparatus (2) such that the bundles are transported successively in a certain order to the labeller (4) by way of the transport apparatus (2), and that the document-of-value processing device (1) transmits the visible serial numbers (S1-S4) of the bundles (B1-B4) transferred to the transport apparatus to the controller (9) in the same order as that in which the associated bundles (B1-B4) are intended to be transported to the labeller (4) by the transport apparatus (2).

9. Method according to Claim 8, **characterized in that** the document-of-value processing device (1) transmits the visible serial numbers (S1-S4) to the controller (9) in series in this order or transmits a list (L) containing visible serial numbers to the controller (9), in which list the order of the visible serial numbers corresponds to the order in which the associated bundles (B1-B4) are intended to be transported to the labeller (4) by the transport apparatus (2).

10. Method according to Claim 9, **characterized in that** the machine-readable identifications (8, 8') of the bundles (B1-B4) are transmitted by the controller (9) to the labeller (4) in the same order as that in which the associated bundles (B1-B4) are intended to be transported to the labeller (4) by the transport apparatus (2).

11. Method according to one of the preceding claims, **characterized in that** in each case two bundles (B1, B2) whose stacks of documents of value have been output in direct succession by the document-of-value processing device (1) and transported to the labeller (4) by way of the transport apparatus (2) and the check of which has not revealed any errors are packaged to form a respective packaging unit (60) by way of a packaging device (6).

12. Method according to one of the preceding claims, **characterized in that** in each case two bundles (B1, B2) whose stacks of documents of value have been output in direct succession by the document-of-value processing device (1) and transported to the labeller (4) by way of the transport apparatus (2) are provided, during labelling, with labels (10) that contain the same machine-readable information.

13. Method according to Claim 12, **characterized in that** the two visible serial numbers (S1, S2) of the two bundles are linked, in the respective linking information (V), with the same machine-readable information and/or the two visible serial numbers (S1, S2) of the two bundles are contained in the same machine-readable information in coded form.

14. Method according to one of the preceding claims, **characterized in that**, when checking the bundles (B1, B2), it is additionally tested whether in each case two bundles (B1, B2) that are transported in direct succession to the labeller (4) and are tested are associated with one another, and depending on whether or not the two directly successive bundles are associated with one another, the further processing of the two bundles is continued or stopped, wherein, in the event that the further processing is continued, said bundles are in particular packaged into the same packaging unit (60) by a packaging device (6).

15. Device (100) for the further processing of documents of value that have been processed using a document-of-value processing device (1) and stacked to form stacks of documents of value and that have been bundled together with an envelope material (12) to form a bundle (B1-B4), wherein the document-of-value processing device (1) has determined the respective visible serial number (S1-S4) of the respective bundle (B1-B4), wherein the device (100) has:
- a controller (9) that is connected to the document-of-value processing device and is configured to process the respective visible serial number (S1-S4) of the respective bundle determined by the document-of-value processing device (1) and to determine a machine-readable identification (8, 8') for the respective bundle and to generate linking information (V) indicating the visible serial number (S1-S4) with which the respective machine-readable identification (8, 8') is linked,
- a labeller (4) that is connected to the controller (9) and is configured to process a machine-readable identification (8, 8') transmitted by the controller to the labeller and that is configured to create a label (10) containing the machine-readable identification (8, 8') transmitted by the controller, and that is configured to label the respective bundle output from the document-of-value processing device and bundled together with the envelope material (12) to form a bundle (B1-B4),
- possibly a transport apparatus (2) for transporting the respective bundle (B1-B4) output from the document-of-value processing device and bundled together with the envelope material (12) to form a bundle (B1-B4) to the labeller (4) in order to label the respective bundle with the label created for the respective bundle,
- a monitoring apparatus (5) for recording the respective bundle, the monitoring apparatus having at least one camera (51) that is arranged such that it is able to capture an image (30) of the respective bundle, said image depicting the visible serial number of the respective bundle and where applicable its label,
wherein the monitoring apparatus (5) and/or the controller (9) is configured to check the respective bundle, and is configured, when checking the respective bundle (B1-B4)
- to extract the actual visible serial number (S1-S4) of the respective bundle (B1-B4) from the image (30) captured by the monitoring apparatus (5),
- to determine the visible serial number (S1-S4) that belongs to the machine-readable identification (8, 8') of that label (10) that was created for the respective bundle,
- to compare the actual visible serial number (S1-S4) of the respective bundle with the visible serial number belonging to the machine-readable identification (8, 8') of the respective label,
- depending on whether or not the check of the respective bundle reveals that the actual visible serial number (S1-S4) of the respective bundle matches the visible serial number belonging to the machine-readable identification (8, 8') of the respective label, the respective bundle continues to be further processed in the event of a match, or the respective bundle stops being further processed in the event of absence of a match.

## Revendications

1. Procédé de traitement ultérieur de documents de valeur qui ont été empilés en piles de documents de valeur à l'aide d'un dispositif de traitement de documents de valeur (1) et regroupés en une liasse (B1-B4) à l'aide d'une matière d'enveloppe (12), ledit procédé comprenant les étapes suivantes :
- déterminer le numéro de série visible (S1-S4) de la liasse respective (B1-B4) à l'aide du dispositif de traitement de documents de valeur (1),
- transmettre le numéro de série visible (S1-S4) de la liasse respective du dispositif de traitement de documents de valeur (1) à un module de commande (9),
- déterminer une identification lisible par machine (8, 8') de la liasse respective à l'aide du module de commande (9),
- générer à l'aide du module de commande (9) une information de liaison (V) qui indique à quel numéro de série visible (S1-S4) l'identification lisible par machine respective (8, 8') est liée,
- transmettre l'identification lisible par machine (8) du module de commande à un module d'étiquetage (4) qui est conçu pour étiqueter la liasse respective regroupée en une liasse (B1-B4) avec la matière d'enveloppe (12),
- créer une étiquette (10) destinée à la liasse respective à l'aide du module d'étiquetage (4), l'identification lisible par machine (8, 8') transmise par le module de commande étant appliquée sur l'étiquette respective,
- transporter la liasse respective (B1-B4) sortant du dispositif de traitement de documents de valeur et regroupée en une liasse (B1-B4) avec la matière d'enveloppe (12) jusqu'au module d'étiquetage (4) à l'aide d'un module de transport (2) afin d'étiqueter la liasse respective avec l'étiquette créée pour la liasse respective,
- détecter la liasse respective (B1-B4) à l'aide d'un module de contrôle (5) qui comporte au moins une caméra (51) avec laquelle il acquiert une image (30) de la liasse respective sur laquelle le numéro de série visible (S1-S4) de la liasse respective et éventuellement également l'étiquette (10) de la liasse respective sont reproduits,
- vérifier la liasse respective, lors de la vérification de la liasse respective
- le numéro de série visible réel (S1) de la liasse respective (B1-B4) étant extrait de l'image (30) acquise par le module de contrôle (5),
- le numéro de série visible (S1-S4) étant déterminé qui appartient à l'identification lisible par machine (8, 8') de l'étiquette qui a été créée pour la liasse respective (B1-B4), et
- le numéro de série visible réel (S1-S4) de la liasse respective étant comparé au numéro de série visible qui appartient à l'identification lisible par machine (8, 8') de l'étiquette respective,
selon que la vérification de la liasse respective montre que le numéro de série visible réel (S1-S4) de la liasse respective correspond ou non au numéro de série visible qui appartient à l'identification lisible par machine (8, 8') de l'étiquette respective, le traitement ultérieur de la liasse respective étant poursuivi en cas de concordance ou arrêté en cas de non-concordance.

2. Procédé selon la revendication 1, **caractérisé en ce que** la liasse respective est étiquetée avec l'étiquette créée pour la liasse respective avant que la liasse respective ne soit détectée par le module de contrôle (5), de sorte que le module de contrôle (5) détecte la liasse déjà étiquetée.

3. Procédé selon la revendication 1, **caractérisé en ce que** la liasse respective est détectée par le module de contrôle (5) avant que la liasse respective ne soit étiquetée avec l'étiquette créée pour la liasse respective, de sorte que le module de contrôle (5) détecte la liasse qui n'a pas encore été étiquetée.

4. Procédé selon la revendication 2, **caractérisé en ce que**, pour détecter l'identification lisible par machine de l'étiquette respective, le module de contrôle (5) extrait l'identification lisible par machine (8, 8') de l'étiquette respective (10) de l'image acquise (30), ou d'une autre image acquise par le module de contrôle (5), que le module de contrôle (5) a acquise de la liasse respective, l'autre image en particulier du côté de la liasse opposé à l'image acquise, étant acquise par exemple à l'aide d'une deuxième caméra (52) du module de contrôle (5) qui est dirigée vers le côté opposé de la liasse (B1-B4).

5. Procédé selon l'une des revendications précédentes, **caractérisé en ce que** la matière d'enveloppe est une matière de préemballage, en particulier une bande de matière (12) avec laquelle la liasse est enfermée annulairement, par exemple une bande de film.

6. Procédé selon l'une des revendications précédentes, **caractérisé en ce que** la matière d'enveloppe (12) est un bandeau.

7. Procédé selon l'une des revendications précédentes, **caractérisé en ce que** la pile de documents de valeur respective, qui est regroupée en une liasse (B1-B4), est une pile de documents de valeur en vrac ou une pile de plusieurs petits paquets entourés d'un bandeau qui sont regroupés en une liasse (B1-B4).

8. Procédé selon l'une des revendications précédentes, **caractérisé en ce que** les documents de valeur vérifiés par le dispositif de traitement de documents de valeur (1) sont regroupés en un grand nombre de liasses (B1-B4) et celles-ci sont transférées vers le module de transporteur (2) de telle sorte que les liasses soient transportés les unes après les autres dans un ordre déterminé jusqu'au module d'étiquetage (4) à l'aide du module de transport (2), et **en ce que** le dispositif de traitement des documents de valeur (1) transmet les numéros de série visibles (S1-S4) des liasses (B1-B4), transférées au module de transport, dans le même ordre au module de commande (9), dans lequel les liasses associées (B1-B4) sont prévues d'être transportées par le module de transport (2) vers le module d'étiquetage (4).

9. Procédé selon la revendication 8, **caractérisé en ce que** le dispositif de traitement de documents de valeur (1) transmet les numéros de série visibles (S1-S4) en série dans cet ordre au module de commande (9) ou transmet au module de commande (9) une liste (L) comportant des numéros de série visibles, pour laquelle l'ordre des numéros de série visibles correspond à l'ordre dans lequel les liasses associées (B1-B4) sont prévues d'être transportés par le module de transport (2) jusqu'au module d'étiquetage (4).

10. Procédé selon la revendication 9, **caractérisé en ce que** les identifications lisibles par machine (8, 8') des liasses (B1-B4) sont transmises du module de commande (9) au module d'étiquetage (4) dans le même ordre dans lequel les liasses associées (B1-B4) sont prévues d'être transportées par le module de transport (2) jusqu'au module d'étiquetage (4).

11. Procédé selon l'une des revendications précédentes, **caractérisé en ce que** deux liasses (B1, B2), dont les piles de documents de valeur ont été délivrées directement l'une après l'autre par le dispositif de traitement de documents de valeur (1) et transportées vers le module d'étiquetage (4) à l'aide du module de transport (2), et dont la vérification n'a révélé aucune erreur, peuvent être emballées pour former une unité d'emballage (60) à l'aide d'un dispositif d'emballage (6).

12. Procédé selon l'une des revendications précédentes, **caractérisé en ce que** deux liasses (B1, B2), dont les piles de documents de valeur ont été délivrées directement l'une après l'autre par le dispositif de traitement de documents de valeur (1) et transportées vers le module d'étiquetage (4) à l'aide du module de transport (2), sont munies, lors de l'étiquetage, d'étiquettes (10) qui comportent la même information lisible par machine.

13. Procédé selon la revendication 12, **caractérisé en ce que** les deux numéros de série visibles (S1, S2) des deux liasses dans l'information de liaison respective (V) sont liés à la même information lisible par machine et/ou les deux numéros de série visibles (S1, S2) des deux liasses sont contenus sous forme codée dans la même information lisible par machine.

14. Procédé selon l'une des revendications précédentes, **caractérisé en ce que**, lors de la vérification des liasses (B1, B2), il est vérifié en outre si deux liasses (B1, B2), qui sont transportées directement l'une après l'autre vers le module d'étiquetage (4) et vérifiées, appartiennent l'une à l'autre et, selon que les deux liasses directement successives appartiennent ou non l'une à l'autre, le traitement ultérieur des deux liasses est poursuivi ou arrêté, en cas de poursuite du traitement ultérieur, lesdites deux liasses étant emballées dans la même unité d'emballage (6) notamment par un dispositif d'emballage (60).

15. Dispositif (100) destiné au traitement ultérieur de documents de valeur qui ont été traités à l'aide d'un dispositif de traitement de documents de valeur (1) et empilés en piles de documents de valeur et qui ont été regroupés en une liasse (B1-B4) avec un matériau d'enveloppe (12), le dispositif de traitement de documents de valeur (1) ayant déterminé le numéro de série visible respectif (S1-S4) de la liasse respective (B1-B4), le dispositif (100) comportant :
- un module de commande (9), qui est relié au dispositif de traitement de documents de valeur et conçu pour traiter, à l'aide du dispositif de traitement de documents de valeur, le numéro de série visible respectif (S1-S4) de la liasse respective qui a été déterminé à l'aide du dispositif de traitement de documents de valeur (1), et pour déterminer une identification lisible par machine (8, 8') pour la liasse respective et pour générer une information de liaison (V) qui indique à quel numéro de série visible (S1-S4) l'identification lisible par machine respective (8, 8') est liée,
- un module d'étiquetage (4), qui est relié au module de commande (9) et qui est conçu pour traiter une identification lisible par machine (8, 8') qui a été transmise du module de commande au module d'étiquetage, et qui est conçu pour créer une étiquette (10) qui comporte l'identification lisible par machine (8, 8') qui a été transmise par le module de commande et qui est conçu pour étiqueter la liasse respective délivrée par le dispositif de traitement de documents de valeur et regroupée en une liaison (B1-B4) avec la matière d'enveloppe (12),
- éventuellement, un module de transport (2) destiné à transporter la liasse respective (B1-B4), délivrée par le dispositif de traitement de documents de valeur et regroupée en une liasse (B1-B4) avec la matière d'enveloppe (12), vers le module d'étiquetage (4) afin d'étiqueter la liasse respective avec l'étiquette créée pour la liasse respective,
- un module de contrôle (5) destiné à détecter la liasse respective, lequel comporte au moins une caméra (51) qui est disposée de manière à pouvoir acquérir une image (30) de la liasse respective sur laquelle sont reproduits le numéro de série visible de la liasse respective et, éventuellement, son étiquette,
le module de contrôle (5) et/ou le module de commande (9) étant conçus pour vérifier la liasse respective, et étant conçus pour, lors de la vérification de la liasse respective (B1-B4),
- extraire le numéro de série visible réel (S1-S4) de la liasse respective (B1-B4) de l'image (30) acquise à l'aide du module de contrôle (5),
- déterminer le numéro de série visible (S1-S4) qui appartient à l'identification lisible par machine (8, 8') de l'étiquette (10) qui a été créée pour la liasse respective,
- comparer le numéro de série visible réel (S1-S4) de la liasse respective au numéro de série visible appartenant à l'identification lisible par machine (8, 8') de l'étiquette respective,
- selon que la vérification de la liasse respective montre que le numéro de série visible réel (S1-S4) de la liasse respective correspond ou non au numéro de série visible appartenant à l'identification lisible par machine (8, 8') de l'étiquette respective, le traitement ultérieur de la liasse respective étant poursuivi en cas de concordance ou arrêté en cas de non-concordance.
